# EUROPÄISCHE PATENTSCHRIFT

(11) **EP 1 342 751 B1**
(45) Veröffentlichungstag und Bekanntmachung des Hinweises auf die Patenterteilung: **27.04.2005**
(21) Anmeldenummer: 03004630.4
(22) Anmeldetag: 03.03.2003
(51) Int. Cl.: C08L 21/00

(54) **Zusammensetzungen, enthaltend Elastomere und Polyethylene hohen Molekulargewichts mit irregulärer Partikelform, Verfahren zu deren Herstellung und deren Verwendung**
Compositions comprising elastomers and polyethylenes having a high molecular weight and an irregular particle form, process for their preparation and their use
Compositions comprenant élastomères et polyethylènes à haut poids moléculaire et à forme de particule irrégulière, procédé de leur préparation et leur utilisation

(30) Priorität: 08.03.2002 DE 10210314
(43) Veröffentlichungstag der Anmeldung: 10.09.2003
(73) Patentinhaber: Ticona GmbH, 65451 Kelsterbach (DE)
(72) Erfinder: Haftka, Stanislaw, Dr., 46145 Oberhausen (DE); Gusik, Meinhard, 46147 Oberhausen (DE); Ehlers, Jens, Dr., 46499 Hamminkeln (DE); Lüdtke, Kerstin, Dr., 46499 Hamminkeln (DE)

(56) Entgegenhaltungen:
- EP-A- 0 645 403
- EP-A- 1 038 697
- WO-A-00/18809
- WO-A-00/18810
- WO-A-85/04365

## Beschreibung

Die vorliegende Erfindung betrifft mehrphasige Elastomerzusammensetzungen, die Polyethylen-Partikel mit einer speziellen Morphologie enthalten und die sich durch ein besonders rheologisches Verhalten auszeichnen. Solche Zusammensetzungen lassen sich auf vielen Gebieten der Technik einsetzen, beispielsweise als Gummimembranen, Dämpfungselemente, Dichtungen und Transportbänder.

Polyethylene ultrahohen Molekulargewichts (nachstehend auch UHMW-PE genannt) werden wegen ihrer hervorragender Abriebfestigkeit und ihres Reibungsverhaltens in Kautschukmischungen eingesetzt. Aus der US-A-6,187,420 sind stoßäbsorbierende Elastomermischungen bekannt, die ein kristallines Polyolefin, beispielsweise ein UHMW-PE oder ein Polyethylen niedriger Dichte oder ein Polypropylen, und einen Dien-Kautschuk enthalten. Aus der US-A-4,735,982 sind thermoplastische Kautschukmischungen bekannt, die einen vulkanisierten Kautschuk, ein UHMW-PE und ein abriebfestes Gleitmittel enthalten. Ferner beschreibt die US-A-6,202,726 einen pneumatischen Reifen mit ausgewählter Geometrie, der eine Komponente aus Kautschuk und UHMW-PE enthält.

Es ist auch bekannt, dass Polyethylene hohen Molekulargewichts (nachstehend auch HMW-PE genannt) und ultrahohen Molekulargewichts mit klassischen Kunststoffverarbeitungsmethoden schwer zu bearbeiten bzw. zu verarbeiten sind und dass Partikel aus diesem Material unterschiedliche Formen annehmen können. So weisen beispielsweise klassische UHMW-PE Pulver eine reguläre Morphologie auf, d.h. diese Pulver können näherungsweise durch eine kompakte Kugelgestalt dargestellt werden. Ein Vertreter dieses Typs mit einer regulären oder gar sphärischen Morphologie ist das Produkt Mipelon 220 von MPC (Mitsui Petrochemicals).

Bei allen bisher bekannt gewordenen Kombinationen von Kautschuken mit HMW-PE bzw. UHMW-PE wurden HMW-PE- bzw. UHMW-PE-Partikel mit einer regulären Morphologie eingesetzt.

Es sind auch bereits Polyethylene hohen und ultrahohen Molekulargewichts bekannt, die in der Form von Partikeln mit irregulärer Geometrie vorliegen. Diese Produkte zeichnen sich durch eine niedrige Schüttdichte aus und sind üblicherweise porös. Beispiele für derartige Partikel aus UHMW-PE sind in der WO-A-00/18,810 beschrieben.

Es wurde jetzt gefunden, dass mehrphasige Zusammensetzungen enthaltend Elastomere und Partikel aus Polyethylenen hohen und/oder ultrahohen Molekulargewichts mit irregulärer Gestalt sich durch eine Reihe von hervorragenden Eigenschaften, beispielsweise durch ein verbessertes Energiedissipationsverhalten auszeichnen, was sich in einem hohen tan δ Niveau widerspiegelt. Weiterhin wurde beobachtet, dass ein Einsatz von HWM-PE bzw. von UHMW-PE nicht nur bekannterweise die Abriebfestigkeit und Gleitverhalten von Gummi/UHMW-PE Mischungen sondern auch überraschenderweise den Weiterreißwiderstand verbessert. Dieses Verhalten ist insbesondere bei Pulvern mit der irregulären Morphologie zu beobachten.

Mit der vorliegenden Erfindung werden Zusammensetzungen bereitgestellt, die ein verbessertes rheologisches Verhalten (hohes tan δ Niveau) und einen stark ausgeprägten Weiterreißwiderstand aufweisen.

Die vorliegende Erfindung betrifft Zusammensetzungen enthaltend mindestens eine Elastomer-Matrix, welche mindestens eine weitere Phase aus Partikeln irregulärer Gestalt von Polyethylenen hohen und/oder ultrahohen Molekulargewichts aufweist. Die irreguläre Partikelform kann über eine extrem niedrige Schüttdichte und eine entsprechend große spezifische Oberfläche des Polyethylen-Pulvers beschrieben werden.

Unter dem Begriff "Elastomer" ist im Rahmen dieser Beschreibung ein Polymer mit gummielastischem Verhalten zu verstehen, das vorzugsweise eine Glastemperatur unterhalb der Gebrauchstemperatur aufweist.

Beispiele für bevorzugte Elastomere sind Acrylat-Kautschuk (ACM), Polyester-Urethan-Kautschuk (AU), bromierter Butyl-Kautschuk (BIIR), Polybutadien (BR), chlorierter Butyl-Kautschuk (CIIR), chloriertes Polyethylen (CM), Epichlorhydrin-Homopolymer (CO), Polychloropren (CR), sulfuriertes Polyethylen (CSM), Ethylen-Acrylat-Kautschuk (EAM), Epichlorhydrin-Copolymere (ECO), Ethylen-Propylen-Copolymere, schwefelvernetzt oder peroxid-vernetzt (EPDM/S, EPDM/P und EPM/P), Polyether-Urethan-Kautschuk (EU), Ethylen-Vinylacetat-Copolymer (EVM), Fluor-Kautschuk (FKM), Ftuorsilikon-Kautschuk (FVMQ), hydrierter Nitril-Kautschuk (H-NBR), Butyl-Kautschuk (IIR), vinyl-haltiges Dimethylpolysiloxan (VMQ), Nitril-Kautschuk (NBR), Naturkautschuk (NR, IR), Thioplaste (OT), Polyfluorphosphazene (PNF), Polynorbornen (PNR), Styrol-Butadien-Kautschuk (SBR) und carboxygruppen-haltiger Nitril-Kautschuk (X-NBR).

Ganz besonders bevorzugt werden Naturkautschuk, EPDM, SBR und NBR eingesetzt.

Als Polyethylene hohen Molekulargewichts bezeichnet man ein Polyethylen mit einem Molekulargewicht, gemessen viskosimetrisch, von mindestens 3*10⁵ g/Mol, insbesondere von 3*10⁵ bis 1*10⁶ g/Mol . Unter Polyethylenen ultrahohen Molekulargewichts versteht man ein Polyethylen mit einem Molekulargewicht, gemessen viskosimetrisch, von mindestens 1*10⁶ g/Mol, insbesondere von 2,5*10⁶ bis 1*10⁷ g/Mol . Die Methode zur viskosimetrischen Bestimmung des Molekulargewichtes ist zum Beispiel in CZ-Chemische Technik, 4 (1974), S. 129, beschrieben.

Bevorzugte Beispiele für Polyethylene hohen Molekulargewichts und insbesondere Polyethylene ultrahohen Molekulargewichts sind lineare Polyethylene verschiedenster Form, vorzugsweise jedoch in der Pulverform.

Bei allen bisher bekannten UHMW-PE - Elastomeranwendungen wurde ein UHMW mit einer regulären Morphologie eingesetzt. Produkte mit einer regulären oder gar sphärischen Morphologie (Mipelon) sind auf dem Markt erhältlich und werden unter anderem als Additive eingesetzt.

Neben Partikeln mit einer regulären oder gar sphärischen Morphologie sind darüber hinaus HMWE-PE und UHMWE-PE Partikel bekannt, die sich durch eine spezielle irreguläre Morphologie auszeichnen. Produkte enthaltend diese Partikel zeichnen sich durch eine niedrige Schüttdichte aus von weniger als 0,35 g/cm³, vorzugsweise von 0,01 bis 0,32 g/cm³, insbesondere von 0,10 bis 0,30 g/cm³ und ganz besonders bevorzugt von 0,15 bis 0,28 g/cm³ und haben in der Regel eine poröse Struktur.

Die erfindungsgemäß eingesetzten Polyolefine hohen oder ultrahohen Molekulargewichts weisen üblicherweise eine mittlere Partikelgröße D₅₀ von 1 bis 600 µm, vorzugsweise von 20 bis 300 µm, insbesondere von 30 - 200 µm auf.

Die Herstellung der erfindungsgemäß eingesetzten Partikel aus Polyolefinen mit hohem oder ultrahohem Molekulargewicht ist beispielsweise in WO-A-00/18,810 oder der DE-A-1,595,666 beschrieben.

Die erfindungsgemäßen Zusammensetzungen können weitere in der Technik der Elastomerblends übliche Zusätze enthalten.

Die Herstellung der erfindungsgemäßen Zusammensetzungen kann nach an sich üblichen Verfahren erfolgen.

Die Erfindung betrifft auch die Herstellung der oben definierten Zusammensetzungen umfassend die Schritte:
a) Einmischen der Partikel irregulärer Gestalt von Polyolefinen hohen und/oder ultrahohen Molekulargewichts in das Elastomer, gegebenenfalls mit weiteren üblichen Elastomer-Additiven, und
b) Vulkanisation des enthaltenen Gemisches in an sich bekannter Weise.

Die Konzentration der Partikel irregulärer Gestalt in den Blends beträgt üblicherweise 1-50 phr (parts per 100 parts rubber), vorzugsweise 5 -30 phr, insbesondere 5 - 20 phr.

Die Partikel irregulärer Gestalt und das Elastomer bilden einen Zweiphasenblend. Die Partikel irregulärer Gestalt befinden sich dabei in der dispergierten Phase. Die erfindungsgemäße Zusammensetzung weist eine hohe Viskosität und Zähigkeit auf, die zu einer verbesserten Weiterreißfestigkeit der Blends führt.

Die erfindungsgemäßen Zusammensetzungen lassen sich auf vielen Gebieten der Technik einsetzen. Bevorzugte Einsatzgebiete sind die Verwendung als Membranen, Dichtungen, Dämpfungselementen und Transportbändern.

Diese Verwendungen sind ebenfalls ein Gegenstand der vorliegenden Erfindung.

### Beispiele

Das verbesserte rheologische Verhalten sowie die verbesserte Weiterreißfestigkeit werden in den nachfolgenden Beispielen erläutert, ohne die Erfindung zu begrenzen. Es wurden Mischungen von HMW-PE bzw. UHMW-PE / EPDM bzw. von HMW-PE bzw. UHMW-PE / NBR bzw. von HMW-PE bzw. UHMW-PE / SBR hergestellt. Diese Mischungen sollen die Verwendung von HMW-PE bzw. UHMW-PE in einer Mischung eines Allround-Kautschuks repräsentieren. An den HMW-PE bzw. UHMW-PE / SBR Mischungen werden die vorteilhaften Eigenschaften der erfindungsgemäßen Zusammensetzungen demonstriert. Als HMW-PE bzw. UHMWE-PE wurden GUR-Typen der Ticona GmbH eingesetzt.

### Mischungsherstellung EPDM - Mischprozess

Die Mischungen wurden auf einem Laborinnenmischer Werner & Pfleiderer GK1,5 E zweistufig hergestellt (1. Stufe: Grundmischung; 2.Stufe: Einmischen weiterer Mischungsbestandteile)

### Mischparameter (Stufe 1)

### Mischparameter EPDM

| | | |
|---|---|---|
| Füllgrad | 75% | 75% |
| Vortemperierung | 60°C | 40°C |
| Rotordrehzahl | 80 U/min | 40 U/min |
| Batchtemperatur | max. 151 - 156°C | max.: 117°C |
| Mischzyklus | 0,0 - 0,5 Minuten; Polymer | |
| | 0,5 - 1,5 Minuten: 1/2 Ruß, GUR-Pulver, Zinkoxid, Stearinsäure | |
| | 1,5 - 5,0 Minuten: 1/2 Ruß, Weichmacheröl | |
| Gesamtmischzeit | 5,0 Minuten (effektiv) - Reinigen und Lüften nach 4,0 Minuten | |

### Mischparameter (Stufe 2)

Die Grundmischungen wurden bei einer Starttemperatur von 70 °C und einer Rotordrehzahl von 80 - 100 U/min bis auf eine Temperatur von ca. 130 - 140°C erwärmt. Erst beim Erreichen dieser Temperaturen setzte sich der Stempel, d.h. die Mischungen wurden plastisch und damit verarbeitbar. Dann wurde die Rotordrehzahl auf 60 U/min zurückgenommen und Schwefel/Beschleuniger 45 Sekunden lang eingemischt. Die Temperaturen beim Auswurf der Mischungen lagen bei zwischen. ca. 110 °C und ca. 130 °C, je nach GUR-Typ und - Konzentration. Der Kneterfüllgrad betrug 65%.

### Mischungsherstellung SBR bzw. NBR- Mischprozess

Die Mischungen wurden auf einem Laborinnenmischer Wemer & Pfleiderer GK1,5 E hergestellt. Schwefel und Vulkanisationsbeschleuniger wurden anschließend auf einem Laborwalzwerk zugemischt.

### Mischparameter Innenmischer

| | |
|---|---|
| Füllgrad | 75%. |
| Vortemperierung | 40°C |
| Rotordrehzahl | 50 U/min |
| Batchtemperatur | max. 137 - 138 °C |
| Mischzyklus | 0,0 - 1,0 Minuten; Polymer |
| | 1,0 - 2,5 Minuten: 3/4 Ruß, GUR-Pulver, Zinkoxid, Stearinsäure, Antioxidantien, Cumaronharz |
| | 2,5 - 4,5 Minuten: 1/4 Ruß, Weichmacher (Vestinol AH) |
| Gesamtmischzeit | 4,5 Minuten (effektiv) - Reinigen und Lüften nach 3,5 Minuten |

### Mischparameter Walzwerk

| | |
|---|---|
| Walzentemperatur | 50°C |
| Walzendrehzahl | 16:20 U/min |
| Mischzyklus | 0,0 - 1,0 Minuten; Grundmischung aus Innenmischer |
| | 1,0 - 5,0 Minuten: Schwefel und Vulkanisationsbeschleuniger |

### Vulkanisation

Die Mischungen wurden bei 160°C (SBR und NBR) bzw. 170°C (EPDM) vulkanisiert. Die Vulkanisationszeiten betrugen t₉₀ + 1 Minute je mm Prüfkörperdicke.

### Rezepturen EPDM

Es wurde eine 65 Shore-A Standardmischung mit einem auf Nitrosaminfreiheit eingestellten Beschleunigungssystem verwendet.

| | EPDM Control | EPDM 2126-5 | EPDM 2126-10 | EPDM 4186-5 | EPDM 4186-10 |
|---|---|---|---|---|---|
| EPDM, 55% Ethylen, 4% ENB | 100,0 | 100,0 | 100,0 | 100,0 | 100,0 |
| GUR2126 | - | 5,0 | 10,0 | - | - |
| GUR4186 | - | - | - | 5,0 | 10,0 |
| Ruß N 550 | 100,0 | 100,0 | 100,0 | 100,0 | 100,0 |
| Zinkoxid RS | 5,0 | 5,0 | 5,0 | 5,0 | 5,0 |
| Stearinsäure | 1,0 | 1,0 | 1,0 | 1,0 | 1,0 |
| Weichmacher, paraffinisch | 50,0 | 50,0 | 50,0 | 50,0 | 50,0 |
| Schwefel 95 % ig | 0,7 | 0,7 | 0,7 | 0,7 | 0,7 |
| BeschleunigerDTDC | 1,0 | 1,0 | 1,0 | 1,0 | 1,0 |
| Beschleuniger ZTDP | 1,2 | 1,2 | 1,2 | 1,2 | 1,2 |
| Beschleuniger MBT | 0,7 | 0,7 | 0,7 | 0,7 | 0,7 |
| Beschleuniger CBS | 1,0 | 1,0 | 1,0 | 1,0 | 1,0 |

| **Rezepturen SBR** | | | | |
|---|---|---|---|---|
| | SBR Control | SBR 2126-5 | SBR 2126-10 | SBR 2126-20 |
| E-SBR, 23% Styrol, 37,5 phr arom.Mineralöl | 137,5 | 137,5 | 137,5 | 137,5 |
| GUR2126 | - | 5,0 | 10,0 | 20,0 |
| Ruß N 234 | 50,0 | 50,0 | 50,0 | 50,0 |
| Zinkoxid RS | 3,0 | 3,0 | 3,0 | 3,0 |
| Stearinsäure | 2,0 | 2,0 | 2,0 | 2,0 |
| ASM^{*)} 6PPD | 2,0 | 2,0 | 2,0 | 2,0 |
| ASM^{*)} TMQ | 1,0 | 1,0 | 1,0 | 1,0 |
| Lichtschutzmikrowachs | 2,0 | 2,0 | 2,0 | 2,0 |
| Schwefel | 1,75 | 1,75 | 1,75 | 1,75 |
| Beschleuniger CBS | 1,0 | 1,0 | 1,0 | 1,0 |
| Beschleuniger DPG | 0,4 | 0,4 | 0,4 | 0,4 |

| | | | | |
|---|---|---|---|---|
| ^{*)} ASM = Alterungsschutzmittel | | | | |

| | SBR Control | SBR 2126-5 | SBR 2126-10 | SBR 2126-20 |
|---|---|---|---|---|
| SBR1712 | 137,5 | 137,5 | 137,5 | 137,5 |
| GUR4186 | 5,0 | 10,0 | 20,0 | - |
| GUR4150 | - | - | - | 10,0 0 |
| Ruß N 234 | 50,0 | 50,0 | 50,0 | 50,0 |
| Zinkoxid RS | 3,0 | 3,0 | 3,0 | 3,0 |
| Stearinsäure | 2,0 | 2,0 | 2,0 | 2,0 |
| ASM^{*)} 6PPD | 2,0 | 2,0 | 2,0 | 2,0 |
| ASM^{*)} TMQ | 1,0 | 1,0 | 1,0 | 1,0 |
| Lichtschutzmikrowachs | 2,0 | 2,0 | 2,0 | 2,0 |
| Schwefel | 1,75 | 1,75 | 1,75 | 1,75 |
| Beschleuniger CBS | 1,0 | 1,0 | 1,0 | 1,0 |
| Beschleuniger DPG | 0,4 | 0,4 | 0,4 | 0,4 |

| | | | | |
|---|---|---|---|---|
| ^{*)} ASM = Alterungsschutzmittel | | | | |

| **Rezeptur NBR** | | | |
|---|---|---|---|
| | NBR Control | NBR 2126-10 | NBR 4186-10 |
| NBR, 33% Acrylnitril | 100,0 | 100,0 | 100,0 |
| GUR2126 | - | 10,0 | - |
| GUR4186 | - | - | 10,0 |
| Ruß N 330 | 40,0 | 40,0 | 40,0 |
| Zinkoxid | 5,0 | 5,0 | 5,0 |
| Stearinsäure | 1,0 | 1,0 | 1,0 |
| ASM^{*)}ZMMBI | 1,0 | 1,0 | 1,0 |
| ASM^{*)} subst. Phenylamin | 1,0 | 1,0 | 1,0 |
| Cumaronharz 75 | 5,0 | 5,0 | 5,0 |
| Weichmacher DOP | 10,0 | 10,0 | 10,0 |
| Schwefel, unlöslich | 1,5 | 1,5 | 1,5 |
| Beschleuniger MBTS | 1,8 | 1,8 | 1,8 |
| Beschleuniger DPG | 0,5 | 0,5 | 0,5 |

| | | | |
|---|---|---|---|
| ^{*)} ASM = Alterungsschutzmittel | | | |

### Beispiel 1: Weiterreißwiderstand der SBR/GUR Mischungen

An oben beschriebenen Blends wurden GUR Typen mit irregulärer Morphologie und GUR Typen mit einer regulären Morphologie verwendet. Die Produkte unterschieden sich auch durch die mittlere Partikelgröße und das Molekulargewicht. An allen Mischungen wurde der Weiterreißwiderstand nach DIN 53507 A gemessen.

Die nachfolgende Tabelle listet die Eigenschaften der Partikel sowie die Messergebnisse auf

| GUR | Kein | Type 1 | Type 2 | Type 3 | Type 4 | Type 5 | Type 6 |
|---|---|---|---|---|---|---|---|
| Morphologie | - | regulär | regulär | irregulär | irregulär | irregulär | irregulär |
| D₅₀ (µm) | - | 60 | 130 | 30 | 60 | 120 | 120 |
| M_{w} (g/mol) | - | 6 Mio. | 6 Mio. | 4 Mio. | 4 Mio. | 4 Mio. | 0,25Mio. |
| Schüttdichte BD (g/cm³) | - | 0,42 | 0,42 | 0,26 | 0,24 | 0,24 | 0,24 |
| Weiterreißwiderstand (N/mm) | 11,5 ± 0,2 | 16,4 ± 0,7 | 16,8 ± 0,7 | 20,5 ± 1,0 | 19,2 ± 1,0 | 20,0 ± 0,9 | 18,0.± 2,3 |

Die Zunahme des statischen Weiterreißwiderstands bei den irregulären GUR-Typen kann durch einen Spannungsabbau erklärt werden, da bei Auftreffen des Risses an den GUR-Partikeln die Spannungen aufgeteilt werden. Der Effekt der Erhöhung des Weiterreißwiderstandes ist wiederum bei den irregulären GUR-Typen am ausgeprägtesten. Dieses ist wahrscheinlich durch großes Partikelvolumen dieser Produkte bedingt.

Beispiel 2. Verbesserte Energiedissipation der SBR / GUR Mischungen mit 30 µm MPS (middle particle size)

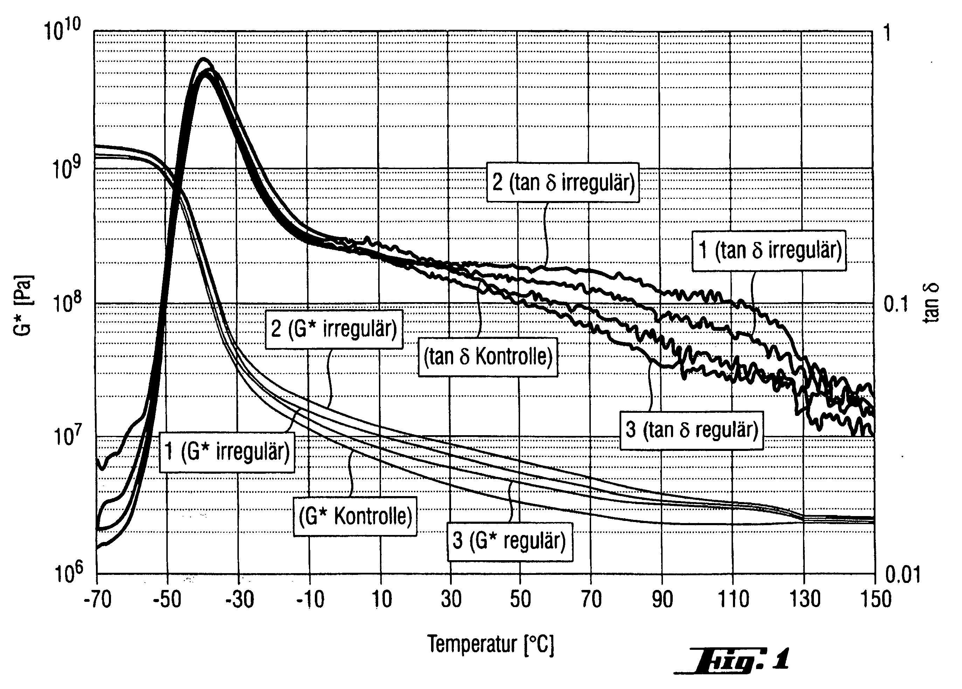

An SBR/GUR Mischungen mit unterschiedlichen GUR Morphologie (Partikel regulärer und irregulärer Gestalt) wurden dynamische Schubmodulmessungen bei einer Frequenz von 1 Hz und einer Verformung von 0,5 % in Abhängigkeit der Temperatur durchgeführt. Die Temperaturabhängigkeiten der Schubmoduli und Verlustwinkel (tan δ) ausgewählter Compounds sind in der Figur 1 dargestellt.

Bei Verwendung von GUR Partikeln regulärer Gestalt (Kurven 3) konnte neben der Modulerhöhung gegenüber der Kontrollmischung keine ausgeprägte Auswirkung auf das Dämpfungsverhalten (tan δ) festgestellt werden.

Werden GUR Partikel irregulärer Gestalt verwendet, so rief bereits eine Konzentration von 10 phr, neben der Modulerhöhung, eine Zunahme von tan δ im Temperaturbereich von 30 - 120°C hervor (vergl. Kurve 1). Das dieser Effekt als systematisch einzustufen ist, wurde durch den Verlauf der tan δ-Kurve des 20 phr Vulkanisates deutlich (vergl. Kurve 2). Der tan δ Verlauf wurde adäquat der Konzentrationsverdoppelung angehoben. Der Grund für dieses unterschiedliche Verhalten liegt in der unterschiedlichen Morphologie und unterschiedlichen Kompressibilität des GUR Pulvers mit irregulären Morphologie. Durch die poröse Komstruktur ist das GUR mit Partikeln irregulärer Gestalt als Blendkomponente bei einer dynamischen Beanspruchung in der Lage, Energie aufzunehmen, was sich in einem zusätzlichen, breiten tan δ Maximum widerspiegelt. Dieses Verhalten ist bei Produkten mit unterschiedlicher Partikelgröße unterschiedlich ausgeprägt.

## Patentansprüche

1. Zusammensetzungen enthaltend mindestens eine Elastomer-Matrix, welche mindestens eine weitere Phase aus Partikeln irregulärer Gestalt von Polyethylenen hohen und/oder ultrahohen Molekulargewichts aufweist, **dadurch gekennzeichnet, dass** die irregulären Partikel eine poröse Struktur und eine Schüttdichte von weniger als 0,35 g/cm³ aufweisen.

2. Zusammensetzungen nach Anspruch 1, **dadurch gekennzeichnet, dass** das Elastomer ausgewählt wird aus der Gruppe bestehend aus Acrylat-Kautschuk (ACM), Polyester-Urethan-Kautschuk (AU), bromiertem Butyl-Kautschuk (BIIR), Polybutadien (BR), chloriertem Butyl-Kautschuk (CIIR), chloriertem Polyethylen (CM), Epichlorhydrin-Homopolymer (CO), Poly-chloropren (CR), sulfuriertem Polyethylen (CSM), Ethylen-Acrylat-Kautschuk (EAM), Epichlorhydrin-Copolymeren (ECO), Ethylen-Propylen-Copolymeren, schwefelvernetzt oder peroxid-vemetzt (EPDM/S, EPDM/P und EPM/P), Polyether-Urethan-Kautschuk (EU), Ethylen-Vinylacetat-Copolymeren (EVM), Fluor-Kautschuk (FKM), Fluorsilikon-Kautschuk (FVMQ), hydriertem Nitril-Kautschuk (H-NBR), Butyl-Kautschuk (IIR), vinyl-haltigem Dimethylpolysiloxan (VMQ), Nitril-Kautschuk (NBR), Natur-kautschuk (NR, IR), Thioplasten (OT), Polyfluorphosphazenen (PNF), Polynorbornen (PNR), Styrol-Butadien-Kautschuk (SBR) und carboxygruppen-haltigem Nitril-Kautschuk (X-NBR).

3. Zusammensetzungen nach Anspruch 2, **dadurch gekennzeichnet, dass** das Elastomere ausgewählt wird aus der Gruppe bestehend aus Naturkautschuk, EPDM, SBR und NBR.

4. Zusammensetzungen nach Anspruch 1, **dadurch gekennzeichnet, dass** das Polyethylen ein Polyethylen ultrahohen Molekulargewichts (UHMW-PE) ist.

5. Zusammensetzungen nach Anspruch 1, **dadurch gekennzeichnet, dass** diese irreguläre Partikel enthalten, die eine Partikelgröße von 1 bis 600 µm, vorzugsweise von 20 bis 300 µm, insbesondere von 30 - 200 µm aufweisen.

6. Verfahren zur Herstellung der Zusammensetzungen nach Anspruch 1 umfassend die Schritte:
a) Einmischen der Partikel irregulärer Gestalt von Polyethylen hohen und/oder ultrahohen Molekulargewichts und einer Schüttdichte von weniger als 0,35 g/cm³ in ein Elastomer, gegebenenfalls mit weiteren üblichen Elastomer-Additiven, und
b) Vulkanisation des enthaltenen Gemisches in an sich bekannter Weise.

7. Verwendung der Zusammensetzungen nach Anspruch 1 als Membranen, Dichtungen, Dämpfungselemente und Transportbänder.

## Claims

1. Compositions comprising at least one elastomer matrix which has at least one other phase of particles of irregular shape of high- and/or ultrahigh-molecular-weight polyethylenes, **characterized in that** the irregular particles have a porous structure and a bulk density of less than 0.35 g/cm³.

2. Compositions according to claim 1, **characterized in that** the elastomer is selected from the group consisting of acrylate rubbers (ACM), polyester-urethane rubber (AU), brominated butyl rubber (BIIR), polybutadiene (BR), chlorinated butyl rubber (CIIR), chlorinated polyethylene (CM), epichlorohydrinhomopolymer (CO), polychloroprene (CR), sulfurated polyethylene (CSM), ethylene-acrylate rubber (EAM), epichlorohydrin copolymers (ECO), ethylene-propylene copolymers, sulfur-crosslinked or peroxide-crosslinked (EPDM/S, EPDM/P and EPM/P), polyether-urethane rubber (EU), ethylenevinyl acetate copolymers (EVM), fluorinated rubber (FKM), fluorosilicone rubber (FVMQ), hydrogenated nitrile rubber (H-NBR), butyl rubber (IIR), vinyl-containing dimethylpolysiloxane (VMQ), nitrile rubber (NBR), natural rubber (NR, IR), thioplastics (OT), polyfluorophosphazenes (PNF), polynorbornene (PNR), styrene-butadiene rubber (SBR), and nitrile rubber containing carboxy groups (X-NBR).

3. Compositions according to claim 2, **characterized in that** the elastomer is selected from the group consisting of natural rubber, EPDM, SBR and NBR.

4. Compositions according to claim 1, **characterized in that** the polyethylene is a ultrahigh-molecular-weight polyethylene (UHMWPE).

5. Compositions according to claim 1, **characterized in that** these comprise irregular particles whose particle size is from 1 to 600 µm, preferably from 20 to 300 µm, in particular from 30 to 200 µm.

6. A process for preparing the compositions according to claim 1, encompassing the steps of:
a) mixing the irregularly shaped particles of high- and/or ultrahigh-molecular-weight polyethylene and of bulk density less than 0.35 g/cm³ into an elastomer, where appropriate with other conventional elastomer additives, and
b) vulcanizing the resultant mixture in a manner known per se.

7. Use of the compositions according to claim 1 as membranes, gaskets, dampers, or conveyor belts.

## Revendications

1. Compositions comprenant au moins une matrice élastomère, laquelle présente au moins une phase supplémentaire de particules à la conformation irrégulière de polyéthylène à haut poids moléculaire et/ou à ultra haut poids moléculaire, **caractérisées en ce que** les particules irrégulières possèdent une structure poreuse et une densité apparente d'au moins de 0,35 g/cm³.

2. Compositions selon la revendication 1, **caractérisées en ce que** l'élastomère est choisi dans le groupe constitué de caoutchouc à base d'acrylate (ACM), de caoutchouc à base d'un mélange uréthane-polyester (AU), de caoutchouc butylique bromé (BIIR), de polybutadiène (BR), de caoutchouc butylique chloré (CIIR), de polyéthylène chloré (CM), d'un homopolymère d'épichlorhydrine (CO), de polychloroprène (CR), d'un polyéthylène sulfuré (CSM), de caoutchouc à base d'un mélange acrylate-éthylène (EAM), d'un copolymère d'épichlorhydrine (ECO), d'un copolymère d'éthylène et de propylène, de soufre réticulé ou de peroxyde réticulé (EPDM/S, EPDM/P et EPM/P), de caoutchouc à base d'un mélange uréthane-polyéther (EU), d'un copolymère de vinylacétate et d'éthylène (EVM), de caoutchouc à base de fluor (FKM), de caoutchouc à base d'un mélange fluor silicone (FVMQ), caoutchouc à base de nitrile hydrogéné (H-NBR), de caoutchouc butylique (IIR), de diméthylpolysiloxane à groupe vinyle (VMQ), de caoutchouc à base de nitrile (NBR), de caoutchouc naturel (NR, IR), de thioplastes (OT), de polyfluorphosphazènes (PNS), de polynorbornène (PNR), de caoutchouc à base d'un mélange butadiène-styrol (SBR) et de caoutchouc à base de nitrile contenant un groupe carboxy (X-NBR).

3. Compositions selon la revendication 2, **caractérisées en ce que** l'élastomère est choisi dans le groupe constitué de caoutchouc naturel, de EPDM, de SBR et de NBR.

4. Compositions selon la revendication 1, **caractérisées en ce que** le polyéthylène est un polyéthylène à ultra haut poids moléculaire (UHMW-PE).

5. Compositions selon la revendication 1, **caractérisées en ce qu'**elles comprennent des particules irrégulières qui présentent une taille particulaire de 1 à 600 µm, de préférence de 20 à 300 µm, particulièrement de 30 à 200 µm.

6. Procédé de préparation des compositions selon la revendication 1 comprenant les étapes :
a) d'introduction en mélange des particules à conformation irrégulière de polyéthylène d'un haut et/ou ultra haut poids moléculaire et à une densité apparente de moins de 0,35 g/cm³ dans un élastomère, le cas échéant avec des additifs élastomères habituels complémentaires, et
b) de vulcanisation du mélange obtenu de manière connue en soi.

7. Utilisation des compositions selon la revendication 1 comme membranes, joints, éléments d'amortissement et bandes transporteuses.
